Europäisches Patentamt

European Patent Office

Office européen des brevets

(11) Veröffentlichungsnummer: **0 242 353**
**B1**

(12) EUROPÄISCHE PATENTSCHRIFT

(45) Veröffentlichungstag der Patentschrift:
**31.05.89**

(21) Anmeldenummer: **85904090.9**

(22) Anmeldetag: **13.06.85**

(86) Internationale Anmeldenummer:
**PCT/DE 85/00272**

(87) Internationale Veröffentlichungsnummer:
**WO 86/03835 (03.07.86 Gazette 86/14)**

(51) Int. Cl.⁴: **G 01 M 3/16,** G 01 L 9/06,
G 01 L 19/00

(54) **ELEKTRISCHER DRUCKGEBER MIT LECKANZEIGEVORRICHTUNG.**

(30) Priorität: **24.12.84 DE 3447396**

(43) Veröffentlichungstag der Anmeldung:
**28.10.87 Patentblatt 87/44**

(45) Bekanntmachung des Hinweises auf die Patenterteilung:
**31.05.89 Patentblatt 89/22**

(84) Benannte Vertragsstaaten:
**DE FR IT SE**

(56) Entgegenhaltungen:
**DE-A-2 901 636**
**US-A-4 079 508**

(73) Patentinhaber: **ROBERT BOSCH GMBH, Postfach 50, D-7000 Stuttgart 1 (DE)**

(72) Erfinder: **ECKARDT, Dieter, Gubitzenhofstr. 17, D-8500 Nürnberg (DE)**
Erfinder: **HETTICH, Gerhard, Holzgraben 30, D-8501 Rosstal (DE)**

## Beschreibung

Die Erfindung geht aus von einem Druckgeber zur Erzeugung von elektrischen Signalen nach der Gattung des Hauptanspruchs. Bei einem solchen bekannten Halbleiter-Druckgeber mit integrierter piezoresistiver Widerstandsbrücke sind die Sensorelemente in Randbereich einer Membran angebracht, die aus einem Siliziumhalbleiter durch Funkenerosion, durch Ätzen oder anderer Verfahren gewonnen wird und die eine Referenzdruckkammer zu dem unter Druck stehenden Medium hin abschließt (US-PS-4 079 508). Zur Messung von Absolutdrücken wird dabei die Referenzdruckkammer unter Vakuum verschlossen. Bei solchen und ähnlichen Druckgebern, die zur Druckmessung eine mit Edelgas gefüllte oder unter Vakuum stehende Referenzdruckkammer aufweisen, werden die von den Sensorelementen bzw. von einem Druckschalter abgegebenen Signale verfälscht, sobald die Referenzdruckkammer undicht wird. Ein Leck in der Referenzdruckkammer kann bei diesen Druckgebern nur durch eine Nachmessung bei einer Wartung des Sensors erkannt werden.

In der DE-A-2 901 636 wird vorgeschlagen, durch Absorptionsmittel Gase, welche gegebenenfalls in die Referenzdruckkammer gelangen, zu absorbieren, um damit das Vakuum der Kammer aufrechtzuerhalten. Beim Auftreten eines Lecks in der Referenzdruckkammer sind jedoch die Absorptionsmittel unzureichend. Eine Überwachung oder eine Leckanzeige ist mit dieser Lösung nicht möglich.

Mit der vorliegenden Lösung wird angestrebt, die Dichtheit der Referenzdruckkammer während des Einsatzes des Druckgebers bei angeschlossener Auswerteschaltung zu überwachen.

## Vorteile der Erfindung

Der erfindungsgemäße Druckgeber mit den kennzeichnenden Merkmalen des Hauptanspruchs hat den Vorteil, daß mit der angeschlossenen Auswerteschaltung jederzeit die Referenzdruckkammer auf einen Lufteinbruch hin überprüft werden kann. Die beim Eindringen von Sauerstoff in die Referenzdruckkammer oxidierende Leiterbahn stellt dabei eine Art Sicherung dar, die den Meßstrom der Sensorelemente oder einen besonderen Überwachungsstromkreis unterbricht. Als weiterer Vorteil ist anzusehen, daß durch eine solche Überwachung der Referenzdruckkammer Druckgeber auch in sicherheitsrelevanten Teilen, wie beispielsweise bei einer Reifendrucküberwachung von Kraftfahrzeugen einsetzbar sind. Darüber hinaus ist die vorgeschlagene Lösung aber nicht nur für Halbleitersensoren sondern für alle Druckgebersysteme verwendbar, die mit einer Referenzdruckkammer arbeiten.

Durch die in den abhängigansprüchen aufgeführten Maßnahmen sind vorteilhafte Weiterbildungen und Verbesserungen der im Hauptanspruch angegebenen Merkmale möglich. Besonders vorteilhaft ist es, wenn die durch Oxidation zu unterbrechende Leiterbahn auf einem Substrat aufgebracht wird, welches zugleich die Sensorelemente trägt. Das Substrat ist dabei in an sich bekannter Weise im Bereich der Sensorelemente als druckabhängig verformbare Membran ausgebildet. Für den elektrischen Anschluß der Leiterbahn ist es besonders zweckmäßig, wenn diese einerseits mit einem auf Bezugspotential liegenden, elektrisch leitenden Bereich der Referenzdruckkammer und andererseits mit einer elektrisch isolierten Durchführung durch die Referenzdruckkammer verbunden ist. In einfachster Weise wird dabei das Bezugspotential an eine ringförmige Leiterbahn einer Leiterplatte gelegt, die mit dem Rand einer Kapsel verlötet ist, welche die Referenzdruckkammer nach außen hin abschließt.

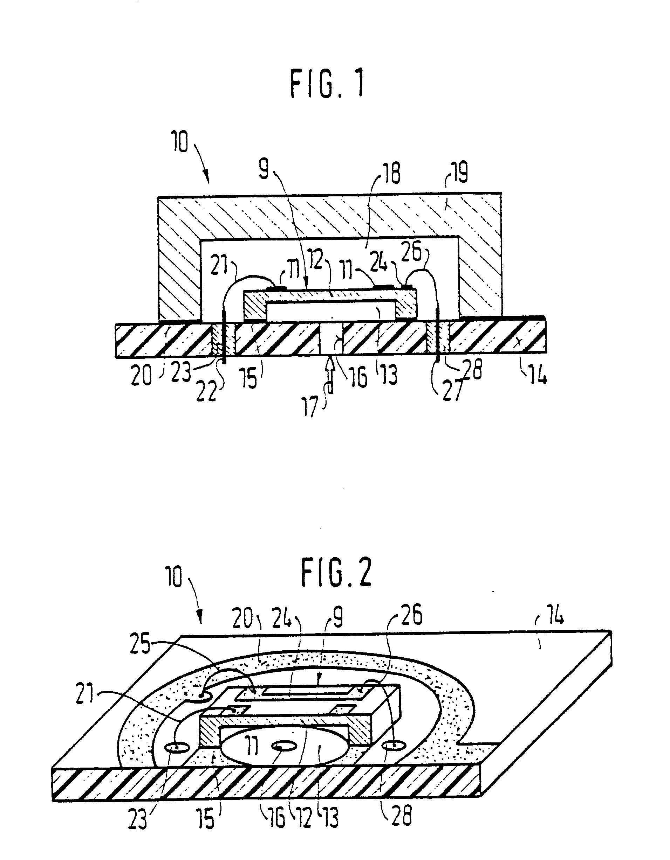

Ein Ausführungsbeispiel der Erfindung ist in der Zeichnung dargestellt und in der nachfolgenden Beschreibung näher erläutert. Es zeigen Figur 1 den erfindungsgemäßen Druckgeber mit einer Kapsel für die Referenzdruckkammer in vergrößerter Darstellung im Querschnitt und Figur 2 zeigt den Druckgeber aus Figur 1 ohne Kapsel in raumbildlicher Darstellung.

## Beschreibung des Ausführungsbeispieles

Der in den Figuren 1 und 2 dargestellte Druckgeber 10 besteht im wesentlichen aus einem Halbleiterchip 9, beispielsweise aus einen Silizium-Einkristall, auf dessen Oberfläche vier piezoresistive Sensorelemente 11 in Form einer Widerstandsbrückenschaltung angeordnet sind. Die Sensorelemente 11, von denen nur zwei in den Figuren erkennbar sind, befinden sich am Rande einer durch äußere Kräfte verformbaren Membran 12, die durch Abtragen des Halbleitermaterials in einem runden oder elliptischen Bereich 13 auf der Rückseite des Druckgebers 10 hergestellt wird. Der Halbleiterchip 9 sitzt fest auf einer Leiterplatte 14, indem er dort mit einer ringförmigen Leiterbahn 15 druckdicht verlötet, verklebt oder gebondet ist. Der elliptische Bereich 13 des Halbleiterchips 9 befindet sich dabei über einer Bohrung 16 in der Leiterplatte 14, durch die ein unter Druck stehendes Medium, beispielsweise Luft, ein Gas oder eine Flüssigkeit in Richtung des Pfeiles 17 zur Membran 12 gelangt. Oberhalb des Halbleiterchips 9 befindet sich gemäß Figur 1 eine Referenzdruckkammer 18, die nach außen hin durch eine Metallkapsel 19 abgeschlossen ist.

Die Referenzdruckkammer 18 ist durch die Membran 12 sowie durch die Leiterplatte 14 zu dem unter Druck stehenden Medium hin abgeschlossen.

Um mit dem Drucksensor 10 den Absolutdruck des Mediums messen zu können, steht die Referenzdruckkammer 18 unter Vakuum. Zur Erzeugung des Vakuums wird beispielsweise die Kapsel 19 im Vakuum mit einer weiteren ringförmigen Leiterbahn 20 auf der Leiterplatte 14 druckdicht verlötet bzw. verschweißt. Diese Leiterbahn 20 wird beim Einsatz des Druckgebers 10 auf ein Bezugspotential gelegt, wobei vorzugsweise auch ein Anschluß der Brückenschaltung der Sensorelemente 11 mit dieser Leiterbahn 20 verbunden ist. Ein weiterer Anschluß der Sensorelemente 11 wird über einen Anschlußdraht 21 mit einem Kontaktstift 22 verbunden, der in einer Glasdurchführung 23 druckdicht in der Leiterplatte 14 befestigt ist.

Zur Überwachung des Vakuums in der Referenzdruckkammer 18 ist auf dem Halbleiterchip 9 des Druckgebers 10 neben den Sensorelementen 11 eine Leiterbahn 24 aufgebracht, deren Material beim Eindringen von Sauerstoff in die Referenzdruckkammer 18 so stark oxidiert, daß die Leiterbahn 24 dadurch elektrisch unterbrochen oder in ihrem Widerstandswert stark verändert wird. Die Leiterbahn 24 ist mit einem Ende über einen Anschlußdraht 25 mit der auf Bezugspotential liegenden, ringförmigen Leiterbahn 20 der Leiterplatte 14 verbunden und mit ihrem anderen Ende ist sie über einen weiteren Anschlußdraht 26 mit einem weiteren Kontaktstift 27 verbunden, der ebenfalls in einer Glasdurchführung 28 in der Leiterplatte 14 druckdicht eingesetzt ist. Beim Einsatz des Drucksensors 10 sind sowohl die Sensorelemente 11 als auch die Leiterbahn 54 zur Überwachung der Referenzdruckkammer 18 mit einer nicht dargestellten Auswerteschaltung verbunden. Die Leiterbahn 24 wird dabei an einen Meßstromkeis der Auswertschaltung angeschlossen, über den mit jeder Inbetriebnahme des Druckgebers 10 zunächst festgestellt werden kann, ob die Leiterbahn 24 noch intakt ist oder nicht. Dabei ist es besonders vorteilhaft, die Leiterbahn 24 zur Überwachung der Referenzdruckkammer 18 aus einem Material herzustellen, das im erhitzten Zustand durch eingedrungenen Sauerstoff in kurzer Zeit so stark oxidiert, daß der Meßstromkreis dadurch unterbrochen wird. Die Leiterbahn 24 wird daher im Beispielsfall aus Nickel hergestellt, das mit jeder Inbetriebnahme des Druckgebers 10 zunächst durch einen Meßstrom auf etwa 500° C erhitzt wird. Anschließend wird die Leiterbahn 24 auf Durchgang geprüft. Sobald nun in der Referenzdruckkammer 18 ein Leck auftritt, strömt Sauerstoff ein und der Meßstromkreis mit der Leiterbahn 24 wird bei Erhitzung unterbrochen. Der Ausfall des Druckgebers 10 wird auf diese Weise mit der Auswerteschaltung festgestellt und gemeldet.

Die Erfindung ist nicht auf das dargestellte Ausführungsbeispiel beschränkt, da das gleiche Lösungsprinzip auch auf andere Druckgeber mit einer Referenzdruckkammer anwendbar ist. In Abwandlung des Ausführungsbeispieles kann beispielsweise die zur Lecküberwachung verwendete Leiterbahn auch auf der Leiterplatte 14 angeordnet sein, wobei diese dann das Substrat für die Leiterbahn bildet, welche einerseits mit der das Bezugspotential führenden ringförmigen Leiterbahn 20 kontaktiert ist und andererseits über einen Anschlußdraht mit dem Kontaktstift 27 der Durchführung 28 verbunden sein kann. Es ist ferner möglich, die Leiterbahn zur Lecküberwachung auf dem Halbleiterchip 9 unmittelbar in die Stromzuführung der Sensorelemente 11 einzufügen, wodurch dann eine der beiden Durchführungen 22 und 28 in der Leiterplatte 14 entfallen könnte. In diesem Fall wäre eine kontinuierliche Überwachung der Vakuumkanner während des Betriebes durch die Auswerteschaltung möglich. Anstelle von Nickel können hier auch andere leicht oxidierbare Metalle, beispielsweise Kalzium, Natrium oder Titan verwendet werden. Außerdem ist es möglich, mit Hilfe einer ständig erhitzten Leiterbahn zur Lecküberwachung gleichzeitig den Druckgeber 10 auf einer konstanten Temperatur zu halten, um auf diese Weise temperaturabhängige Schwankungen der am Druckgeber 10 abgegebenen Meßsignale zu vermeiden. Die Verwendung eines Materials, welches nur im erhitzten Zustand oxidiert, hat ferner den Vorteil, daß der Druckgeber während der Herstellung unter Raumtemperatur auch an der Luft bearbeitet bzw. transportiert werden kann. Schließlich ist es ebenso möglich, anstelle eines Vakuums in der Referenzdruckkammer diese mit einem unter Druck stehenden Gas, beispielsweise einem Edelgas zu füllen, das keine Oxidation der Leiterbahn bewirkt. Bei einem Leck der Referenzdruckkammer würde dieses Gas ausströmen und anschließend wird der Sauerstoff der durch das Leck eindringenden Luft die Leiterbahn durch Oxidation unterbrechen.

Das Lösungsprinzip ist sowohl bei Halbleitersensoren, Dehnungsmeßstreifen, kapazitiven Drucksensoren, induktiven Druckgebern, Hall-Gebern und anderen Druckaufnehmern zu verwenden, soweit diese mit einer Referenzdruckkammer versehen sind.

## Patentansprüche

1. Druckgeber (10) zur Erzeugung von elektrischen Signalen mit einer mindestens ein elektrisches Sensorelement (11) tragenden, druckabhängig verformbaren Membran (12), die eine Referenzdruckkammer (18) zu einem unter Druck stehenden Medium hin abschließt, wobei die Referenzdruckkammer (18) ein sauerstofffreier, vorzugsweise unter Vakuum stehender Raum ist, dadurch gekennzeichnet, daß in der Referenzdruckkammer (18) auf einem Substrat (9) eine mit einem Meßstromkreis einer Auswerteschaltung zu verbindende Leiterbahn (24) zur Lecküberwachung der Referenzdruckkammer (18) angeordnet ist, die bei einem Leck in der Referenzdruckkammer (18) durch eingedrungenen Sauerstoff so stark oxidiert, daß die Leiterbahn (24) elektrisch unterbrochen ist.

2. Druckgeber nach Anspruch 1, dadurch gekennzeichnet, daß die Leiterbahn (24) auf einem mehrere Sensorelemente (11) tragenden Substrat (9) aufgebracht ist, welches im Bereich der Sensorelemente (11) die druckabhängig verformbare Membran (12) bildet.

3. Druckgeber nach Anspruch 1 oder 2, dadurch gekennzeichnet, daß die Leiterbahn (24) einerseits mit einem elektrisch leitenden Bereich (20) der Referenzdruckkammer (18) und andererseits mit einer elektrisch isolierten Durchführung (27, 28) verbunden ist.

4. Druckgeber nach Anspruch 3, dadurch gekennzeichnet, daß der elektrisch leitende Bereich der Referenzdruckkammer (18) aus einer ringförmigen Leiterbahn (20) einer Leiterplatte (14) besteht, auf der eine die Referenzdruckkammer (18) nach außen abschließende Kapsel (19) druckdicht befestigt ist.

5. Druckgeber nach einem der vorherigen Ansprüche, dadurch gekennzeichnet, daß die Leiterbahn (24) zur Lecküberwachung der Referenzdruckkammer (18) durch einen elektrischen Strom zu erhitzen ist und bei Erhitzung durch eingedrungenen Sauerstoff oxidiert.

6. Druckgeber nach Anspruch 5, dadurch gekennzeichnet, daß die Leiterbahn (24) zur Lecküberwachung der Referenzdruckkammer (18) aus Nickel besteht.

## Claims

1. Pressure detector (10) for generating electrical signals having at least one membrane (12) which supports an electrical sensor element (11) and can be deformed as a function of pressure and which seals a reference-pressure chamber (18) against a medium which is under pressure, the reference-pressure chamber (18) being an oxygen-free space which is preferably under vacuum, characterized in that there is disposed on a substrate (9) in the reference-pressure chamber (18) a conductor track (24) which for the purpose of leakage monitoring of the reference-pressure chamber (18), is intended for connection to a measuring circuit of an evaluation circuit and which oxidizes so strongly in the event of a leakage in the reference-pressure chamber (18) due to infiltrated oxygen that the conductor track (24) is electrically interrupted.

2. Pressure detector according to Claim 1, characterized in that there is disposed on a substrate (9) the conductor track (24) which supports several sensor elements (11) and which forms, in the region of the sensor elements (11), the membrane (12) which can be deformed as a function of pressure.

3. Pressure detector according to Claim 1 or 2, characterized in that the conductor track (24) is connected, on the one hand, to an electrically conducting region (20) of the reference-pressure chamber (18) and, on the other hand, to an electrically insulated read through (27, 28).

4. Pressure detector according to Claim 3, characterized in that the electrically conducting region of the reference-pressure chamber (18) is composed of an annular conductor track (20) of a conductor board (14) on which a capsule (19) is mounted which seals the reference-pressure chamber (18) in the outward direction.

5. Pressure detector according to one of the preceding Claims, characterized in that the conductor track (24) is intended to be heated by an electrical current for the purpose of leakage monitoring the reference-pressure chamber (18) and oxidizes on heating as a result of infiltrated oxygen.

6. Pressure detector according to Claim 5, characterized in that the conductor track (24) for leakage monitoring the reference-pressure chamber (18) is composed of nickel.

## Revendications

1. Capteur de pression (10) pour la production de signaux électriques avec une membrane déformable en fonction de la pression portant au moins un élément capteur électrique (11), membrane (12) délimitant une chambre de pression de référence (18) soumise à un fluide sous pression, la chambre de pression de référence (18) étant une enceinte exempte d'oxygène, placée de préférence sous vide, caractérisé en ce qu'une piste conductrice (24) est disposée sur un substrat (9) dans la chambre de pression de référence (18), piste à relier à un circuit de mesure et qui, dans le cas d'une fuite dans la chambre de pression de référence (18), est si fortement oxydée par l'oxygène entrant, que la piste conductrice est électriquement interrompue.

2. Capteur de pression selon la revendication 1, caractérisé en ce que la piste conductrice (24) est appliquée sur un substrat (9) portant plusieurs éléments capteurs (11) et formant au voisinage des éléments capteurs (11) la membrane (12) déformable en fonction de la pression.

3. Capteur de pression selon la revendication 1 ou 2, caractérisé en ce que la piste conductrice (24) est reliée d'une part à une zone (20) électriquement conductrice de la chambre de pression de référence (18) et d'autre part à un passage (27, 28) électriquement isolant.

4. Capteur de pression selon la revendication 3, caractérisé en ce que la zone électriquement conductrice de la chambre de pression de référence (18) se compose d'une piste conductrice (20) d'une plaque conductrice (14), sur laquelle une capsule (19) isolant vers l'extérieur la chambre de pression de référence (18) est fixée de manière étanche à la pression.

5. Capteur de pression selon l'une des revendications précédentes, caractérisé en ce que la piste conductrice (24) destinée au contrôle de fuite de la chambre de pression de référence (18) est chauffée par un courant électrique et oxydée par l'oxygène entrant lors de la surchauffe.

6. Capteur de pression selon la revendication 5, caractérisé en ce que la piste conductrice (24) destinée au contrôle de fuite de la chambre de pression de référence (18) se compose de nickel.

# FIG. 1

# FIG. 2